# EUROPEAN PATENT SPECIFICATION

(11) **EP 3 738 816 B1**
(45) Date of publication and mention of the grant of the patent: **07.12.2022**
(21) Application number: 19754876.1
(22) Date of filing: 14.02.2019
(51) Int. Cl.: B60L 15/20, B60L 7/14, B60W 10/04, B60W 10/08, B60W 10/20, B60W 30/045, B60L 7/18, B60W 20/00

(54) **VEHICLE CONTROL METHOD, AND CONTROL DEVICE FOR VEHICLE SYSTEM AND VEHICLE**
FAHRZEUGSTEUERVERFAHREN UND STEUERVORRICHTUNG FÜR EIN FAHRZEUGSYSTEM UND FAHRZEUG
PROCÉDÉ DE COMMANDE DE VÉHICULE, ET DISPOSITIF DE COMMANDE POUR SYSTÈME DE VÉHICULE ET VÉHICULE

(30) Priority: 16.02.2018 JP 2018025657
(43) Date of publication of application: 18.11.2020
(73) Proprietor: MAZDA MOTOR CORPORATION, Hiroshima 730-8670 (JP)
(72) Inventor: UMETSU Daisuke, Aki-gun, Hiroshima 730-8670 (JP); SUNAHARA Osamu, Aki-gun, Hiroshima 730-8670 (JP); OGAWA Daisaku, Aki-gun, Hiroshima 730-8670 (JP)
(74) Representative: Müller-Boré & Partner Patentanwälte PartG mbB
(86) International application number: PCT/JP2019/005270
(87) International publication number: WO 2019/160010

(56) References cited:
- EP-A1- 3 587 208
- WO-A1-2017/078077
- JP-A- 2008 001 304
- JP-A- 2014 166 014
- JP-A- 2017 087 890
- US-A1- 2017 129 481
- US-A1- 2017 129 482

## Description

### Technical Field

The present invention relates to a control method for a vehicle, a vehicle system, and a vehicle controller controlling a vehicle posture.

### Background Art

Conventionally, a technique (for example, a sideslip prevention device) of controlling behavior of a vehicle for safety at the time when the behavior of the vehicle becomes unstable due to a slip or the like has been known. More specifically, a technique of detecting that the behavior such as understeer or oversteer occurs to the vehicle during cornering of the vehicle or the like and applying appropriate deceleration to wheels in order to prevent the understeer or the oversteer has been known.

Meanwhile, a vehicle motion controller has been known. Instead of the control to improve the safety in such a travel condition that the behavior of the vehicle becomes unstable as described above, the vehicle motion controller adjusts the deceleration during cornering so that a series of operations (braking, turning of a steering wheel, acceleration, returning of the steering wheel, and the like) by a driver during cornering of the vehicle in a normal travel condition becomes natural and stable.

Furthermore, a vehicle behavior controller has been proposed. The vehicle behavior controller reduces generated torque by an engine or a motor according to a yaw-rate related amount (for example, yaw acceleration) that corresponds to the steering operation by the driver, so as to promptly generate the deceleration on the vehicle at the time when the driver starts the steering operation (for example, PTL 1). According to this controller, turnability of the vehicle at an initial stage of entry to a curve is improved, and responsiveness to the turning operation of the steering wheel (that is, steering stability) is improved. As a result, it is possible to realize control for a vehicle posture that meets the driver's intention. Hereinafter, such control will appropriately be referred to as "vehicle posture control".

### Citation List

### Patent Literature

PTL 1: Japanese Patent No. 6112304

Document US 2017/129482 A1 describes a vehicle behavior control device that is designed to control a behavior of a vehicle having steerable front road wheels. The vehicle behavior control device comprises a PCM configured to perform control to reduce a driving force for the vehicle according to a steering speed of the vehicle, wherein the PCM is operable to reduce a change rate during increasing of a reduction amount of the driving force according to the steering speed of the vehicle, to a smaller value, as a steering wheel angle of the vehicle becomes larger.

Document US 2017/129481 A1 describes a vehicle behavior control device comprising a PCM configured to decide a target additional deceleration. The PCM is operable: to correct the target additional deceleration in such a manner that it is reduced by multiplying the target additional deceleration by a coefficient K1 set according to a vehicle speed, a coefficient K2 set according to a steering wheel angle, a coefficient K3 set according to an accelerator position and a coefficient K4 decided according to a required deceleration; when a value derived by multi-plying the target additional deceleration by K1 and K2 is less than a threshold DT, to stop a torque reduction control; and, when the value derived by multiplying the target additional deceleration by K1 and K2 is equal to or greater than DT, and a value derived by multiplying the target additional deceleration by K3 and K4 is less than DT, to maintain the torque reduction control.

Document WO 2017/078077 A1 describes a vehicle behavior control device for controlling the behavior of a vehicle, when progressing straight ahead, so as to accurately realize the behavior intended by a driver with-out disorienting the driver. The vehicle behavior control device has a PCM for per-forming control so as to reduce the vehicle torque in accordance with the steering speed of a vehicle. The PCM performs control so that the vehicle steering angle increases when the steering speed has exceeded a predetermined threshold TS, the amount by which the vehicle torque is reduced being increased correspond-ingly with respect to the increase in the steering speed when the steering speed is increasing, and the reduction in torque being halted when the steering speed is equal to or less than the threshold TS.

### Summary of Invention

### Technical Problem

In the vehicle posture control as described above, such a vehicle posture that a vehicle front portion in a space of a vehicle body (a portion above suspensions) is lowered is assumed when the deceleration is added to the vehicle in response to the turning operation of the steering wheel. In this way, vehicle turning performance is improved. However, in the conventional vehicle posture control, there is a case where the vehicle turning performance cannot be improved by the vehicle posture control when the vehicle is decelerated. A reason therefor is as follows.

During the deceleration of the vehicle, the vehicle front portion in the space of the vehicle body is brought into a lowered state (a state where a lowered amount of the vehicle front portion is larger than that of a vehicle rear portion) in comparison with a time when the vehicle travels at a constant speed or a time when the vehicle is accelerated. In this state, rigidity of suspensions in the vehicle front portion, that is, rigidity of compression of springs in the suspensions is increased. Accordingly, during the deceleration of the vehicle, each of the springs of the suspensions in the vehicle front portion is already in a compressed state. Thus, in the case where the vehicle posture control is executed in this state, the vehicle front portion is not sufficiently lowered when the deceleration is added by such control. As a result, there is a case where the vehicle turning performance cannot sufficiently be improved.

The present invention has been made to solve the problem of the above-described related art and therefore has a purpose of appropriately securing an improvement effect on vehicle turning performance by vehicle posture control during deceleration of a vehicle in a control method for a vehicle, a vehicle system, and a vehicle controller executing the vehicle posture control for adding the deceleration to the vehicle when a turning operation of a steering system is performed.

### Solution to Problem

The claimed invention is defined by the features set out in the independent claims. Particular embodiments are defined in the dependent claims.

In the present invention that is configured as described above, when the turning operation of the steering system is performed, the deceleration is added to the vehicle so as to control the vehicle posture, that is, vehicle posture control is executed. In addition, in the invention of the present application, the deceleration, which is added to the vehicle in the vehicle posture control, is increased to be higher when the deceleration (expressed by an absolute value. The same applies as follows.) generated on the vehicle has the first value than when the deceleration generated on the vehicle has the second value that is lower than the first value. Accordingly, it is possible to promptly generate a yaw rate on the vehicle at initiation of the turning operation of the steering system by solving insufficiency of lowering of a vehicle front portion at the time when the deceleration is added by the vehicle posture control during the deceleration of the vehicle. Therefore, according to the present invention, it is possible to appropriately secure an improvement effect on vehicle turning performance by the vehicle posture control during the deceleration of the vehicle.

Also with the present invention that is configured as described above, it is possible to appropriately secure the vehicle turning performance by the vehicle posture control during the deceleration of the vehicle.

Preferably, the present invention further includes a step of increasing the deceleration, which is added to the vehicle in order to control the vehicle posture, to be higher when a depression amount of a brake pedal in the vehicle has a first value than when the depression amount of the brake pedal has a second value that is smaller than the first value.

There is a correlation between the depression amount of the brake pedal and the deceleration generated on the vehicle. More specifically, the deceleration generated on the vehicle is increased with an increase in the depression amount of the brake pedal. Therefore, according to the above present invention, it is possible to appropriately set the deceleration, which is added in the vehicle posture control, according to the deceleration corresponding to the depression amount of the brake pedal.

Preferably, the present invention further includes a step of increasing the deceleration, which is added to the vehicle in order to control the vehicle posture, to be higher when a depression amount of an accelerator pedal in the vehicle is substantially 0 than when the depression amount of the accelerator pedal is not substantially 0.

When the depression amount of the accelerator pedal is substantially 0, the deceleration is generated on the vehicle. Therefore, according to the above present invention, it is possible to appropriately set the deceleration, which is added in the vehicle posture control, according to the deceleration that is generated at the time when the depression amount of the accelerator pedal is substantially 0.

Preferably, the present invention further includes a step of increasing the deceleration, which is added to the vehicle in order to control the vehicle posture, to be higher when a transmission of the vehicle is shifted to a deceleration side than when the transmission of the vehicle is not shifted to the deceleration side.

When the transmission is shifted to the deceleration side (that is, during down-shifting), the deceleration is generated on the vehicle. Therefore, according to the above present invention, it is possible to appropriately set the deceleration, which is added in the vehicle posture control, according to the deceleration generated at the time when the transmission is shifted to the deceleration side.

Also with the vehicle system and the vehicle controller according to the present invention that is configured as described above, it is possible to appropriately secure the vehicle turning performance by the vehicle posture control during the deceleration of the vehicle.

### Advantageous Effects of Invention

According to the present invention, in the control method for the vehicle, the vehicle system, and the vehicle controller executing the vehicle posture control for adding the deceleration to the vehicle when the turning operation of the steering system is performed, it is possible to appropriately secure the improvement effect on the vehicle turning performance by such control during the deceleration of the vehicle.

### Brief Description of Drawings

[Fig. 1] Fig. 1 is a block diagram illustrating an overall configuration of a vehicle on which a vehicle controller according to a first embodiment of the present invention is mounted.
[Fig. 2] Fig. 2 is a block diagram illustrating an electric configuration of the vehicle controller according to the first embodiment of the present invention.
[Fig. 3] Fig. 3 is a flowchart of vehicle posture control processing according to the first embodiment of the present invention.
[Fig. 4] Fig. 4 is a map for explaining one example of a method for setting target deceleration according to the first embodiment of the present invention.
[Fig. 5] Fig. 5 is a flowchart of additional deceleration setting processing according to the first embodiment of the present invention.
[Fig. 6] Fig. 6 is a map illustrating a relationship between additional deceleration and a steering speed according to the first embodiment of the present invention.
[Fig. 7] Fig. 7 is a map that defines a gain (an additional deceleration gain) used to correct the additional deceleration according to the first embodiment of the present invention.
[Fig. 8] Fig. 8 includes time charts, each of which represents a temporal change in a parameter related to vehicle posture control in the case where the vehicle, on which the vehicle controller according to the first embodiment of the present invention is mounted, turns.
[Fig. 9] Fig. 9 is a block diagram illustrating an overall configuration of a vehicle on which a vehicle controller according to a second embodiment of the present invention is mounted.
[Fig. 10] Fig. 10 is a flowchart of vehicle posture control processing according to the second embodiment of the present invention.
[Fig. 11] Fig. 11 includes time charts, each of which represents a temporal change in a parameter related to vehicle posture control in the case where the vehicle, on which the vehicle controller according to the second embodiment of the present invention is mounted, turns.

### Description of Embodiments

A description will hereinafter be made on a vehicle controller according to an embodiment of the present invention with reference to the accompanying drawings.

### <First Embodiment>

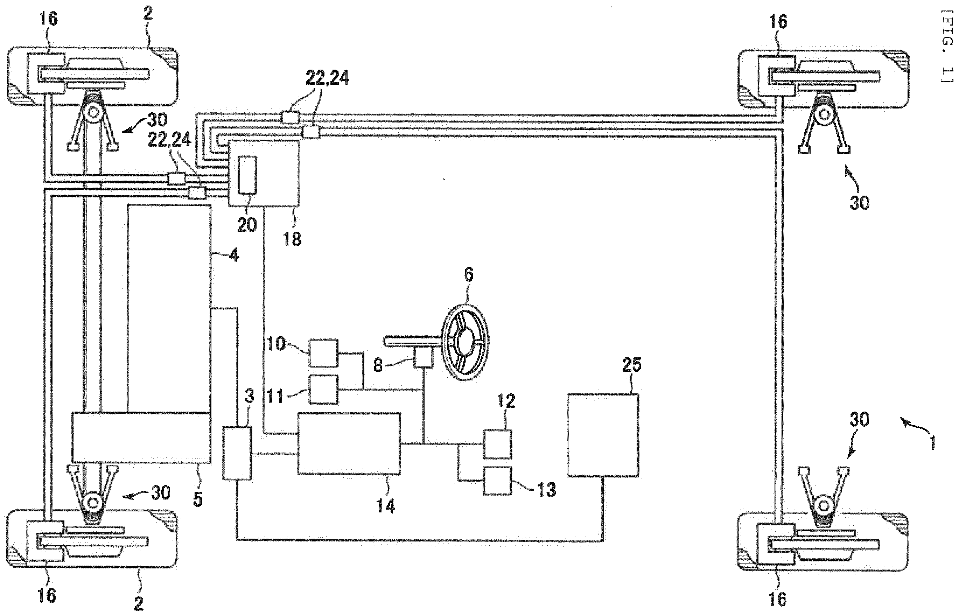

First, a description will be made on a first embodiment of the present invention. First, a description will be made on a system configuration of a vehicle, on which a vehicle controller according to the first embodiment of the present invention is mounted, with reference to Fig. 1. Fig. 1 is a block diagram illustrating an overall configuration of the vehicle, on which the vehicle controller according to the first embodiment of the present invention is mounted.

In Fig. 1, the vehicle, on which the vehicle controller according to this embodiment is mounted, is denoted by a reference sign 1. A motor generator 4 is mounted on the vehicle 1. The motor generator 4 has: a function of driving front wheels 2 (that is, a function as an electric motor); and a function of generating regenerative power when being driven by the front wheels 2 (that is, a function as a generator). Power is transmitted between the motor generator 4 and the front wheels 2 via a reduction gear unit 5 (corresponding to a transmission), and the motor generator 4 is controlled by a controller 14 via an inverter 3. Furthermore, the motor generator 4 is connected to a battery 25, is supplied with electric power from the battery 25 when generating drive power, and supplies the electric power to the battery 25 and charges the battery 25 with the electric power when generating the regenerative power.

The vehicle 1 includes: a steering system (a steering wheel 6 and the like) for steering the vehicle 1; a steering angle sensor 8 that detects a rotation angle of a steering column (not illustrated) coupled to the steering wheel 6 in this steering system; an accelerator operation amount sensor 10 that detects an accelerator pedal depression amount corresponding to an operation amount of an accelerator pedal; a brake depression amount sensor 11 that detects a depression amount of a brake pedal; a vehicle speed sensor 12 that detects a vehicle speed; and an acceleration sensor 13 that detects acceleration (also including deceleration) generated on the vehicle 1. Each of these sensors outputs a detection value to the controller 14. This controller 14 is configured to include a power-train control module (PCM) and the like, for example. Furthermore, each of the wheels of the vehicle 1 is suspended to a vehicle body via a suspension 30 that includes an elastic member (typically, a spring), a suspension arm, and the like.

The vehicle 1 further includes a brake control system 18 that supplies a brake hydraulic pressure to a brake caliper in a brake system (a braking device) 16 provided to each of the wheels. The brake control system 18 includes: a hydraulic pump 20 that generates the brake hydraulic pressure required to generate a braking force in the brake system 16 provided to each of the wheels; a valve unit 22 (more specifically, a solenoid valve) that is provided in a hydraulic pressure supply line to the brake system 16 for each of the wheels and controls the hydraulic pressure to be supplied from the hydraulic pump 20 to the brake system 16 for each of the wheels; and a hydraulic pressure sensor 24 that detects the hydraulic pressure supplied from the hydraulic pump 20 to the brake system 16 for each of the wheels. For example, the hydraulic pressure sensor 24 is arranged in a connected portion between each of the valve units 22 and the hydraulic pressure supply line on a downstream side thereof, detects the hydraulic pressure on the downstream side of each of the valve units 22, and outputs a detection value to the controller 14.

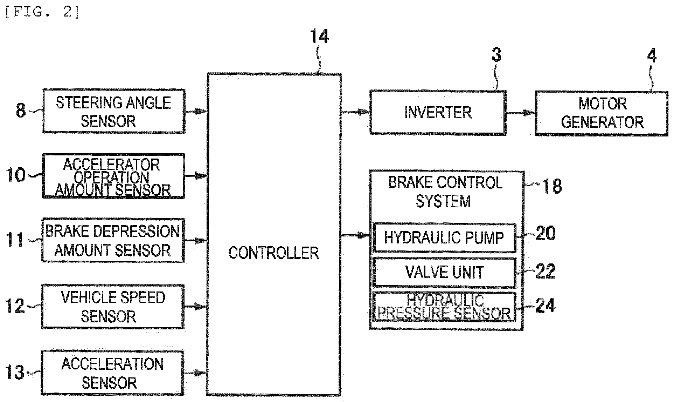

Next, a description will be made on an electric configuration of the vehicle controller according to the first embodiment of the present invention with reference to Fig. 2. Fig. 2 is a block diagram illustrating the electric configuration of the vehicle controller according to the first embodiment of the present invention.

The controller 14 (the vehicle controller) according to this embodiment controls the motor generator 4 and the brake control system 18 on the basis of detection signals that are output by various sensors for detecting an operation state of the vehicle 1 in addition to detection signals of the above-described sensors 8, 10, 11, 12, 13. More specifically, when the vehicle 1 is driven, the controller 14 calculates target torque (drive torque) to be applied to the vehicle 1, and outputs a control signal to the inverter 3 such that the motor generator 4 generates this target torque. Meanwhile, when the vehicle 1 brakes, the controller 14 calculates target regenerative torque to be applied to the vehicle 1, and outputs a control signal to the inverter 3 such that the motor generator 4 generates this target regenerative torque. Alternatively, when the vehicle 1 brakes, instead of using such regenerative torque or in addition to use of the regenerative torque, the controller 14 may calculate a target braking force to be applied to the vehicle 1, and may output a control signal to the brake control system 18 so as to generate this target braking force. In this case, the controller 14 causes the brake system 16 to generate a desired braking force by controlling the hydraulic pump 20 and the valve units 22 in the brake control system 18.

The controller 14 (the same applies to the brake control system 18) is constructed of a computer that includes: one or more processors; various programs (including a basic control program such as an OS and an application program that is activated on the OS to implement a particular function), each of which is run interpretatively on the processor; and internal memory such as ROM and RAM for storing the programs and various types of data.

Although a detail will be described later, the controller 14 corresponds to the vehicle controller according to the present invention. The controller 14 also functions as the vehicle posture control means according to the present invention. Furthermore, a system that at least includes the controller 14, the wheels (the front wheels 2 and rear wheels), the motor generator 4, the steering angle sensor 8, and the suspensions 30 corresponds to the vehicle system according to the present invention.

Fig. 1 illustrates an example in which the rotation angle of the steering column, which is coupled to the steering wheel 6, (an angle detected by the steering angle sensor 8) is used as a steering angle. However, instead of the rotation angle of the steering column or in addition to the rotation angle of the steering column, any of various state amounts (a rotation angle of a motor generating assist torque, displacement of a rack in a rack and pinion, and the like) in the steering system may be used as the steering angle.

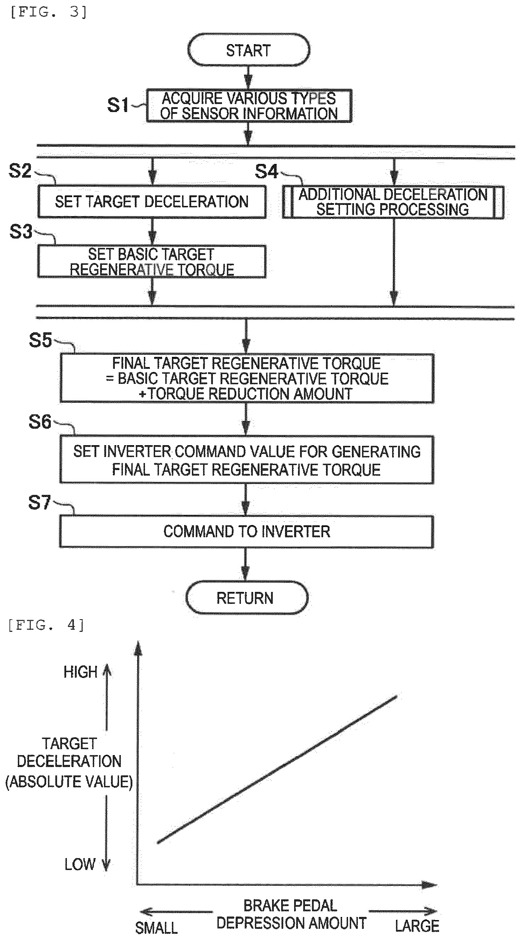

Next, a description will be made on vehicle posture control according to the first embodiment of the present invention. First, a description will be made on an overall flow of vehicle posture control processing that is executed by the vehicle controller according to the first embodiment of the present invention with reference to Fig. 3. Fig. 3 is a flowchart of the vehicle posture control processing according to the first embodiment of the present invention.

When an ignition of the vehicle 1 is turned on and the electric power is supplied to the vehicle controller, the vehicle posture control processing in Fig. 3 is initiated and is repeatedly executed in specified cycles (for example, 50 ms). This vehicle posture control processing is executed when the vehicle 1 is not driven, that is, during braking of the vehicle 1.

When the vehicle posture control processing is initiated, in step S1, the controller 14 acquires various types of sensor information on the operation state of the vehicle 1. More specifically, the controller 14 acquires the detection signals that are output by the above-described various sensors as the information on the operation state. The detection signals include the steering angle detected by the steering angle sensor 8, the accelerator pedal depression amount (the accelerator pedal operation amount) detected by the accelerator operation amount sensor 10, the brake pedal depression amount detected by the brake depression amount sensor 11, the vehicle speed detected by the vehicle speed sensor 12, and the like.

Next, in step S2, the controller 14 sets target deceleration to be added to the vehicle 1 on the basis of the operation state of the vehicle 1 that is acquired in step S1. Typically, the controller 14 sets the target deceleration on the basis of the brake pedal depression amount. Here, a description will be made on one example of a method for setting the target deceleration according to the embodiment of the present invention with reference to Fig. 4.

Fig. 4 is a map illustrating a relationship between the brake pedal depression amount (a horizontal axis) and the target deceleration (a vertical axis). This map is defined that the target deceleration (an absolute value) is increased with an increase in the brake pedal depression amount. In step S2, the controller 14 uses a map as illustrated in Fig. 4 to determine target acceleration or the target deceleration according to the brake pedal depression amount. The target deceleration may be set in consideration of the vehicle speed, a depression speed and a return speed of the brake pedal, and the like instead of such a brake pedal depression amount.

Next, in step S3, the controller 14 sets basic target regenerative torque of the motor generator 4 so as to generate the target deceleration set in step S2.

In parallel with the processing in steps S2 and S3, in step S4, the controller 14 executes additional deceleration setting processing and determines a torque reduction amount on the basis of a steering speed of the steering system. The torque reduction amount is required to control a vehicle posture by generating the deceleration on the vehicle 1. A detailed description on this additional deceleration setting processing will be made later.

Next, in step S5, the controller 14 determines final target regenerative torque on the basis of the basic target regenerative torque determined in step S3 and the torque reduction amount determined in step S4. More specifically, the controller 14 sets a value that is acquired by adding the torque reduction amount to the basic target regenerative torque as the final target regenerative torque (in principle, the basic target regenerative torque and the torque reduction amount are expressed by positive values). That is, the controller 14 increases the regenerative torque (braking torque) that is applied to the vehicle 1. In the case where the torque reduction amount is not determined (that is, in the case where the torque reduction amount is 0) in step S4, the controller 14 adopts the basic target regenerative torque as is as the final target regenerative torque.

Next, in step S6, the controller 14 sets a command value for the inverter 3 (an inverter command value) so as to generate the final target regenerative torque determined in step S5. That is, the controller 14 sets the inverter command value (a control signal) that causes the motor generator 4 to generate the final target regenerative torque. Then, in step S7, the controller 14 outputs the inverter command value, which is set in step S6, to the inverter 3. After this step S7, the controller 14 terminates the vehicle posture control processing.

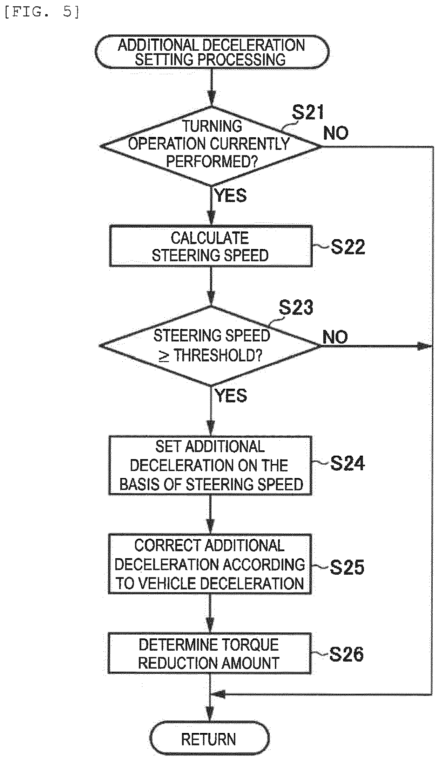

Next, a description will be made on the additional deceleration setting processing according to the first embodiment of the present invention with reference to Fig. 5 to Fig. 7.

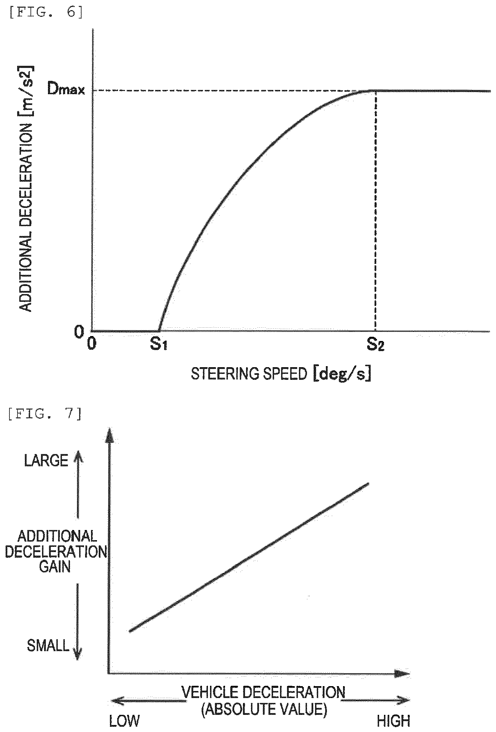

Fig. 5 is a flowchart of the additional deceleration setting processing according to the first embodiment of the present invention. Fig. 6 is a map illustrating a relationship between additional deceleration and the steering speed according to the first embodiment of the present invention. Fig. 7 is a map that defines a gain (an additional deceleration gain) used to correct the additional deceleration acquired from the map in Fig. 6 according to the deceleration generated on the vehicle 1 in the first embodiment of the present invention.

When the additional deceleration setting processing in Fig. 5 is initiated, in step S21, the controller 14 determines whether a turning operation of the steering wheel 6 is currently performed (that is, whether the steering angle (an absolute value) is currently increased).

As a result, if the turning operation is currently performed (step S21: Yes), the processing proceeds to step S22. Then, the controller 14 calculates the steering speed on the basis of the steering angle that is acquired from the steering angle sensor 8 in step S1 of the vehicle posture control processing illustrated in Fig. 3.

Next, in step S23, the controller 14 determines whether the steering speed is equal to or higher than a specified threshold S₁. As a result, if the steering speed is equal to or higher than the threshold S₁ (step S23: Yes), the processing proceeds step S24, and the controller 14 sets the additional deceleration on the basis of the steering speed. This additional deceleration is deceleration that should be added to the vehicle 1 according to a steering operation in order to control the vehicle posture along with a driver's intention.

More specifically, the controller 14 sets the additional deceleration that corresponds to the steering speed calculated in step S22 on the basis of the relationship between the additional deceleration and the steering speed illustrated in the map in Fig. 6. A horizontal axis in Fig. 6 represents the steering speed, and a vertical axis therein represents the additional deceleration. As illustrated in Fig. 6, in the case where the steering speed is lower than the threshold S₁, the corresponding additional deceleration is 0. That is, in the case where the steering speed is lower than the threshold S₁, the controller 14 does not execute the control for adding the deceleration to the vehicle 1 on the basis of the steering operation.

On the other hand, in the case where the steering speed is equal to or higher than the threshold S₁, the additional deceleration that corresponds to this steering speed gradually approximates a specified upper limit value Dₘₐₓ along with an increase in the steering speed. That is, as the steering speed is increased, the additional deceleration is increased, and an increase rate of an increase amount thereof is reduced. This upper limit value Dₘₐₓ is set to the deceleration of such a magnitude that the driver does not consider that control intervention occurs even when the deceleration is added to the vehicle 1 according to the steering operation (for example, 0.5 m/s² ≈ 0.05 G). Furthermore, in the case where the steering speed is equal to or higher than a threshold S₂ that is higher than the threshold S₁, the additional deceleration is maintained at the upper limit value Dₘₐₓ.

Next, in step S25, the controller 14 corrects the additional deceleration set in step S24 by the additional deceleration gain that corresponds to the deceleration (vehicle deceleration) generated on the vehicle 1. More specifically, on the basis of the map illustrated in Fig. 7, the controller 14 determines the additional deceleration gain that corresponds to the current vehicle deceleration, and corrects the additional deceleration by this additional deceleration gain.

In Fig. 7, a horizontal axis represents the vehicle deceleration (an absolute value), and a vertical axis represents the additional deceleration gain. This map illustrated in Fig. 7 is defined that the additional deceleration gain is increased with an increase in the vehicle deceleration (the absolute value). Accordingly, a correction is made such that the additional deceleration (an absolute value) is increased with the increase in the vehicle deceleration (the absolute value).

In step S25, the controller 14 refers to Fig. 7 and determines the additional deceleration gain that corresponds to the current vehicle deceleration. For example, as the vehicle deceleration used to determine the additional deceleration gain, the controller 14 adopts the target deceleration determined in step S2 of Fig. 3 or the deceleration detected by the acceleration sensor 13. Then, the controller 14 corrects the additional deceleration by the thus-determined additional deceleration gain. For example, the controller 14 corrects the additional deceleration by multiplying the additional deceleration by a value that corresponds to the additional deceleration gain.

Next, in step S26, the controller 14 determines the torque reduction amount on the basis of the additional deceleration that is corrected in step S25. More specifically, the controller 14 determines a torque amount that is required to generate the additional deceleration by an increase in the regenerative torque from the motor generator 4. After step S26, the controller 14 terminates the additional deceleration setting processing, and the processing returns to a main routine.

Meanwhile, in step S21, if the turning operation of the steering wheel 6 is not currently performed (step S21: No), or in step S23, if the steering speed is lower than the threshold S₁ (step S23: No), the controller 14 terminates the additional deceleration setting processing without setting the additional deceleration, and the processing returns to the main routine. In this case, the torque reduction amount becomes 0.

In the above step S25, the additional deceleration, which is set on the basis of the steering speed, is corrected by the additional deceleration gain corresponding to the vehicle deceleration. In another example, the additional deceleration may be set on the basis of the steering speed and the vehicle deceleration without making the correction using the additional deceleration gain. For example, a map defining the additional deceleration that should be set with respect to the steering speed and the vehicle deceleration may be prepared. Then, by using such a map, the additional deceleration that corresponds to the current steering speed and the current vehicle deceleration may be set.

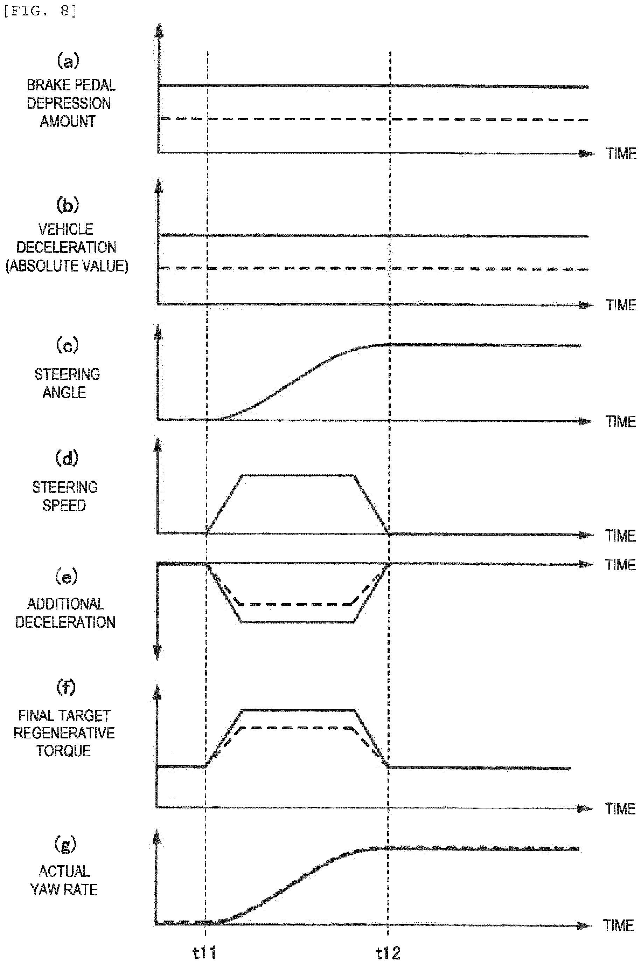

Next, a description will be made on operational effects of the vehicle controller according to the first embodiment of the present invention with reference to Fig. 8. Fig. 8 includes time charts, each of which represents a temporal change in one of various parameters related to the vehicle posture control at the time when the vehicle 1, on which the vehicle controller according to the first embodiment of the present invention is mounted, turns.

In Fig. 8, a chart (a) represents the brake pedal depression amount, a chart (b) represents the vehicle deceleration (the absolute value), a chart (c) represents the steering angle, a chart (d) represents the steering speed, a chart (e) represents the additional deceleration, a chart (f) represents the final target regenerative torque, and a chart (g) represents an actual yaw rate.

A description will herein be made on the changes in the various parameters related to the vehicle posture control by using two examples that are a first example and a second example. More specifically, in each of Figs. 8(a), (b), (e), (f), (g), a solid line represents the change in the parameter according to the first example, and a broken line represents the change in the parameter according to the second example. As illustrated in Fig. 8(a), it is assumed that the brake pedal is depressed by the driver in both of the first example and the second example and that the brake pedal depression amount is larger in the first example than in the second example. Thus, as illustrated in Fig. 8(b), the vehicle 1 is decelerated in both of the first example and the second example, and the deceleration (an absolute value) is higher in the first example than in the second example. In addition, as illustrated in Fig. 8 (f), the final target regenerative torque is applied such that the motor generator 4 generates the regenerative power to decelerate the vehicle 1.

In a situation as described above, as illustrated in Fig. 8 (c), the turning operation of the steering wheel 6 is performed from time t11. In this case, in a period from the time t11 to time t12, as illustrated in Fig. 8(d), the steering speed becomes equal to or higher than the threshold S₁, and, as illustrated in Fig. 8(e), the additional deceleration is set on the basis of this steering speed. More specifically, the steering speed is the same in the first example and the second example. However, the additional deceleration (the absolute value) is higher in the first example than in the second example. This is because, in the first example, the additional deceleration gain having a relatively large value is set (see Fig. 7) due to the higher vehicle deceleration than that in the second example (see Fig. 8(b)) and the additional deceleration (the absolute value) is corrected to be increased by this additional deceleration gain. As illustrated in Fig. 8(f), the final target regenerative torque is set according to such additional deceleration in each of the first example and the second example. More specifically, the final target regenerative torque is higher in the first example than in the second example. Then, by controlling the motor generator 4 to generate such final target regenerative torque, the actual yaw rate as illustrated in Fig. 8 (g) is generated on the vehicle 1. More specifically, substantially the same actual yaw rate is generated on the vehicle 1 in the first example and the second example.

As described in the section of "Technical Problem", during the deceleration of the vehicle, a vehicle front portion in a space of a vehicle body is brought into a lowered state (a state where a lowered amount of the vehicle front portion is larger than that of a vehicle rear portion) in comparison with a time when the vehicle travels at a constant speed or a time when the vehicle is accelerated. In this state, rigidity of the suspensions 30 in the vehicle front portion, that is, rigidity of compression of the springs in the suspensions 30 is increased. Accordingly, during the deceleration of the vehicle, each of the springs of the suspensions 30 in the vehicle front portion is already in a compressed state. Thus, in the case where the vehicle posture control is executed in this state, the vehicle front portion tends not to be sufficiently lowered when the deceleration is added by such control. That is, since the springs of the suspensions 30 in the vehicle front portion are in the compressed states during the deceleration of the vehicle, a large force is required to compress each of the springs in comparison with a state where the springs are not compressed (the time when the vehicle travels at the constant speed or the when the vehicle is accelerated). Thus, it is desired to increase the additional deceleration in the vehicle posture control.

For the above reason, in this embodiment, the controller 14 increases the additional deceleration (the absolute value) during the deceleration of the vehicle. In particular, in this embodiment, the controller 14 makes the correction using the additional deceleration gain such that the additional deceleration (the absolute value) is increased with the increase in the vehicle deceleration (see Fig. 7). Thus, the additional deceleration (the absolute value) is increased with the increase in the vehicle deceleration. As a result, according to this embodiment, it is possible to appropriately secure vehicle turning performance by the vehicle posture control by solving the insufficiency of lowering of the vehicle front portion at the time when the deceleration is added by the vehicle posture control during the deceleration of the vehicle. More specifically, as in the first example and the second example illustrated in Fig. 8(g), it is possible to secure the vehicle turning performance by generating the appropriate actual yaw rate to the vehicle 1 by the vehicle posture control regardless of the vehicle deceleration.

As it has been described so far, according to the first embodiment, it is possible to promptly generate the yaw rate on the vehicle 1 at the initiation of the turning operation of the steering wheel 6 by solving the insufficiency of lowering of the vehicle front portion at the time when the deceleration is added by the vehicle posture control during the deceleration of the vehicle. Therefore, it is possible to appropriately secure an improvement effect on the vehicle turning performance by the vehicle posture control during the deceleration of the vehicle.

A description will hereinafter be made on modified examples of the first embodiment described above, that do not form part of the claimed invention.

In the above embodiment, in an entire region of the vehicle deceleration, the additional deceleration gain is increased with the increase in the vehicle deceleration (see Fig. 7). However, the definition of the additional deceleration gain is not limited to that just as described. In another example, in the case where the vehicle deceleration is lower than the specified value, the additional deceleration gain may be increased with the increase in the vehicle deceleration. Meanwhile, in the case where the vehicle deceleration is equal to or higher than the specified value, the additional deceleration gain may be set to a constant value (a value that is equal to or larger than the additional deceleration gain at the time when the vehicle deceleration is lower than the specified value) regardless of the vehicle deceleration. In yet another example, both in the case where the vehicle deceleration is lower than the specified value and in the case where the vehicle deceleration is equal to or higher than the specified value, the additional deceleration gain is set to the constant value regardless of the vehicle deceleration. However, in the case where the vehicle deceleration is equal to or higher than the specified value, the additional deceleration gain may be increased to be larger than that in the case where the vehicle deceleration is lower than the specified value. That is, in the case where the vehicle deceleration is lower than the specified value, the additional deceleration gain may be set to a first specified value. In the case where the vehicle deceleration is equal to or higher than the specified value, the additional deceleration gain may be set to a second specified value that is larger than the first specified value.

In the above-described embodiment, the additional deceleration that is used in the vehicle posture control is set on the basis of the vehicle deceleration (the target deceleration determined in step S2 of Fig. 3 or the deceleration detected by the acceleration sensor 13). More specifically, the additional deceleration (the absolute value) is increased with the increase in the vehicle deceleration (the absolute value). In another example, instead of using such vehicle deceleration or in addition to use the vehicle deceleration, the additional deceleration may be set on the basis of the brake pedal depression amount detected by the brake depression amount sensor 11. In this example, the additional deceleration (the absolute value) only needs to be increased with the increase in the brake pedal depression amount.

In yet another example, instead of using the vehicle deceleration as described above or in addition to use the vehicle deceleration, the additional deceleration may be set on the basis of the accelerator pedal depression amount detected by the accelerator operation amount sensor 10 (the accelerator pedal operation amount). In this example, the additional deceleration (the absolute value) only needs to become larger when the accelerator pedal depression amount is substantially 0 than when the accelerator pedal depression amount is equal to or larger than 0. In addition, in the case where the vehicle 1 as an EV vehicle is configured that the motor generator 4 generates the regenerative power when the accelerator pedal depression amount is substantially 0 and that a regeneration amount at this time can be changed, the additional deceleration may be set according to this regeneration amount. For example, in the case where the vehicle 1 is configured to be able to select one mode of plural regeneration modes (a high regeneration mode, a low regeneration mode, and the like), the additional deceleration may be set according to the selected regeneration mode.

### <Second Embodiment>

Next, a description will be made on a second embodiment that does not form part of the claimed invention. In the first embodiment described above, the example in which the present invention is applied to the vehicle 1 (the EV vehicle) that is driven by the motor generator 4 has been described. In the second embodiment, the present invention is applied to a general vehicle that is driven by an engine. In addition, in the first embodiment, in the vehicle posture control, the motor generator 4 generates the regenerative power such that the additional deceleration is generated on the vehicle 1 (see Fig. 3). In the second embodiment, in the vehicle posture control, the additional deceleration is generated on the vehicle when the brake system 16 adds the braking force.

Hereinafter, a description on a similar configuration (including the control and the processing) to that in the first embodiment will appropriately be omitted. That is, the configuration that will not particularly be described is the same as that in the first embodiment.

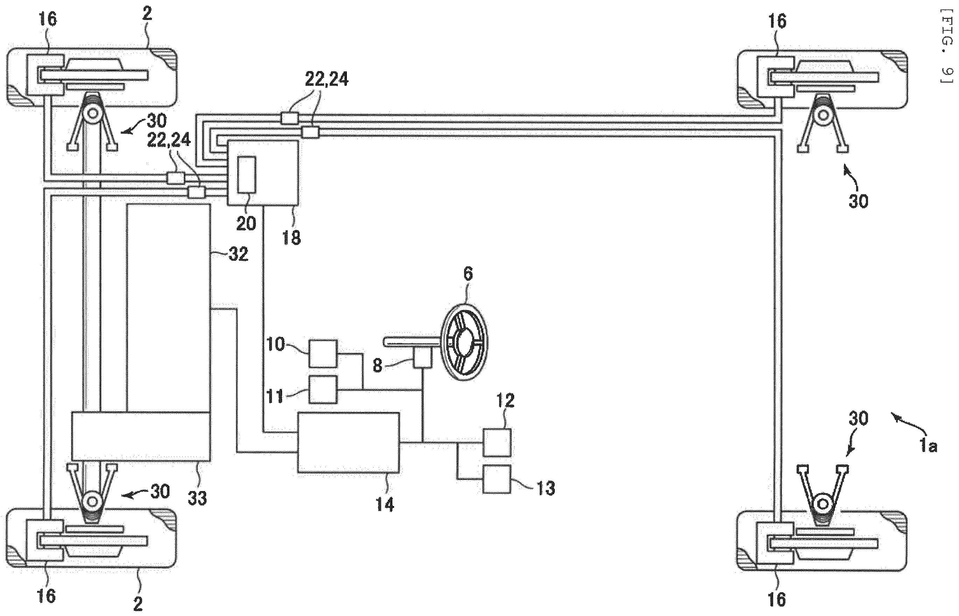

Fig. 9 is a block diagram illustrating an overall configuration of the vehicle, on which a vehicle controller according to the second embodiment of the present invention is mounted. As illustrated in Fig. 9, a vehicle 1a according to the second embodiment has a different configuration from that of the vehicle 1 according to the first embodiment in a point that an engine 32 and a transmission 33 are provided instead of the motor generator 4 and the reduction gear unit 5. The engine 4 is an internal combustion engine such as a gasoline engine or a diesel engine. The transmission 33 is typically an automatic transmission and is configured to be able to change a speed of the engine 4.

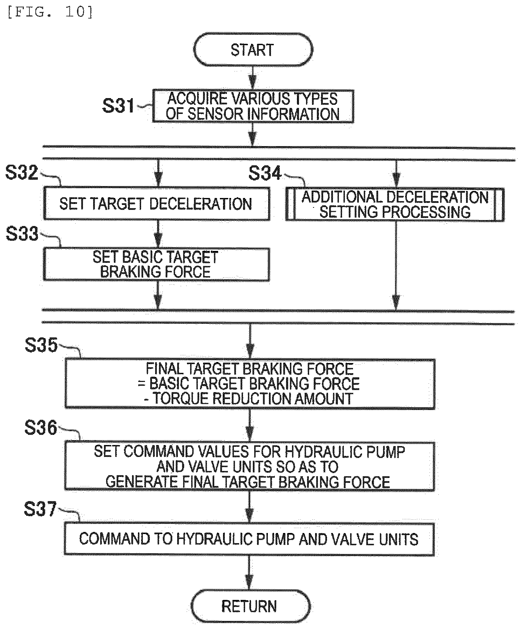

Next, Fig. 10 is a flowchart of vehicle posture control processing according to the second embodiment of the present invention. Hereinafter, a description on the same processing as that in the vehicle posture control processing illustrated in Fig. 3 will not be made. More specifically, steps S31, S32, and S34 in Fig. 10 are respectively the same as steps S1, S2, and S4 in Fig: 3. Thus, only steps S33 and S35 to S37 will hereinafter be described.

In step S33, the controller 14 sets a basic target braking force by the brake system 16 so as to generate the target deceleration set in step S32.

In parallel with the processing in steps S32 and S33, in step S34, the controller 14 executes the additional deceleration setting processing (see Fig. 5) and determines the torque reduction amount, which is required to control the vehicle posture, by generating the deceleration on the vehicle 1a on the basis of the steering speed of the steering system. This additional deceleration setting processing is the same as the first embodiment, and thus the description thereon will not herein be made.

Next, in step S35, the controller 14 determines a final target braking force on the basis of the basic target braking force determined in step S33 and the torque reduction amount determined in step S34. More specifically, the controller 14 sets a value that is acquired by subtracting the torque reduction amount (a positive value) from the basic target braking force (a negative value) as the final target braking force (a negative value) . That is, the controller 14 increases the braking force that is applied to the vehicle 1a. In the case where the torque reduction amount is not determined (that is, in the case where the torque reduction amount is 0) in step S34, the controller 14 adopts the basic target braking force as is as the final target braking force.

Next, in step S36, the controller 14 sets command values for the hydraulic pump 20 and the valve units 22 of the brake control system 18 so as to generate the final target braking force determined in step S35. That is, the controller 14 sets the command values (control signals) for the hydraulic pump 20 and the valve units 22 that cause the brake system 16 to generate the final target braking force. Then, in step S37, the controller 14 outputs the command values, which are set in step S36, to the hydraulic pump 20 and the valve units 22. After this step S37, the controller 14 terminates the vehicle posture control processing.

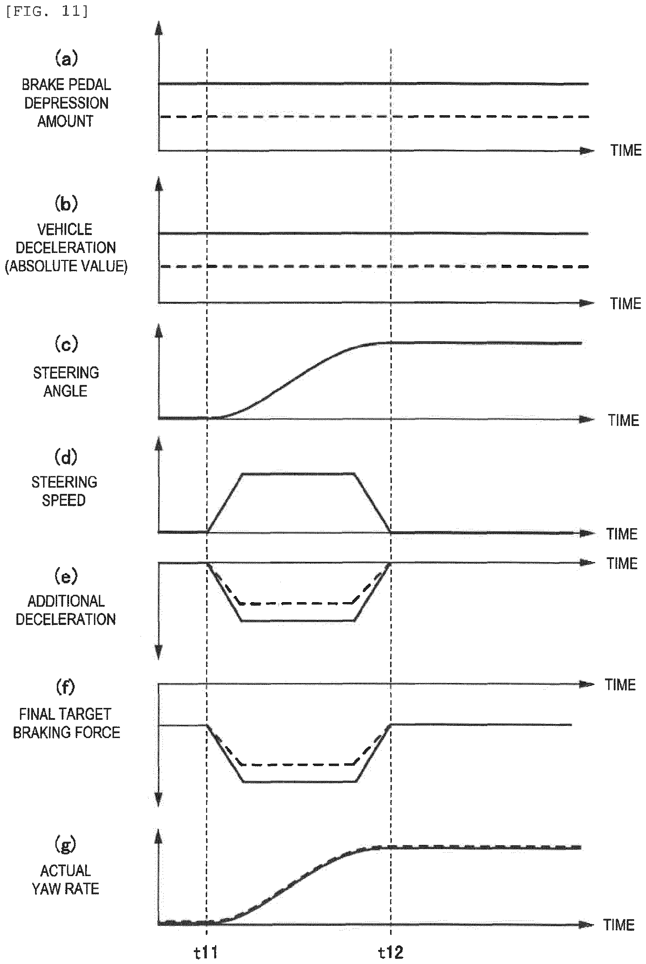

Next, a description will be made on operational effects of the vehicle controller according to the second embodiment of the present invention with reference to Fig. 11. Fig. 11 includes time charts, each of which represents a temporal change in one of various parameters related to the vehicle posture control at the time when the vehicle 1a, on which the vehicle controller according to the second embodiment of the present invention is mounted, turns.

In Fig. 11, a chart (a) represents the brake pedal depression amount, a chart (b) represents the vehicle deceleration (the absolute value), a chart (c) represents the steering angle, a chart (d) represents the steering speed, a chart (e) represents the additional deceleration, a chart (f) represents the final target braking force, and a chart (g) represents the actual yaw rate. When Fig. 11 is compared to Fig. 8 according to the first embodiment, the charts (a) to (e) and (g) are the same, and only the chart (f) differs. More specifically, the chart (f) in Fig. 11 represents the final target braking force that is set according to the additional deceleration of the chart (e) in Fig. 11. In the chart (f) in Fig. 8, the final target regenerative torque has the positive value. Meanwhile, in the chart (f) in Fig. 11, the final target braking force has the negative value. The chart (f) in Fig. 11 corresponds to a chart that is acquired by reversing the chart (f) in Fig. 8.

As it is apparent from Fig. 11, also in the second embodiment, it is possible to appropriately secure the improvement effect on the vehicle turning performance by the vehicle posture control during the deceleration of the vehicle.

In the case where the vehicle 1a is equipped with the transmission (an automatic transmission) 33 as in the second embodiment, the additional deceleration, which is applied in the vehicle posture control, may be set according to gear shifting in the transmission 33. More specifically, when the transmission 33 is shifted to a deceleration side (only needs to be detected by a range sensor or the like), that is, during shift-down of the transmission 33, the additional deceleration (the absolute value), which is applied in the vehicle posture control, only needs to be increased.

### Reference Signs List

1, 1a: vehicle
2: front wheel
3: inverter
4: motor generator
6: steering wheel
8: steering angle sensor
10: accelerator operation amount sensor
11: brake depression amount sensor
12: vehicle speed sensor
14: controller
16: brake system
18: brake control system
25: battery
30: suspension
32: engine
33: transmission

## Claims

1. A control method for a vehicle (1, 1a) having: wheels (2); a suspension (30) that includes an elastic member; and a steering angle sensor (8) that detects a steering angle of a steering system, the control method for the vehicle comprising:
a step of setting target deceleration to be added to the vehicle (1, 1a) based on at least a depression amount of a brake pedal in the vehicle (1, 1a);
a step of determining whether a turning operation of the steering system is performed on the basis of the steering angle that is detected by the steering angle sensor (8);
a step of setting additional deceleration based on a steering speed calculated from the steering angle when it is determined that the turning operation of the steering system is performed;
a step of controlling the vehicle (1, 1a) such that deceleration in which the additional deceleration is added to the target deceleration is generated on the vehicle (1, 1a);
and **characterized by**
a step of correcting the additional deceleration to increase the additional deceleration, such correction
to be higher when actual deceleration generated on the vehicle or the target deceleration has a first value than when the actual deceleration generated on the vehicle or the target deceleration has a second value that is lower than the first value.

2. The control method for the vehicle (1, 1a) according to claim 1,
wherein the vehicle (1, 1a) further comprises a generator (4) that is driven by the wheels to generate regenerative power, and
wherein the control method for the vehicle further comprises a step of causing the generator (4) to generate the regenerative power such that the deceleration in which the additional deceleration is added to the target deceleration is generated on the vehicle (1, 1a).

3. The control method for the vehicle (1, 1a) according to claim 1,
wherein the vehicle (1, 1a) further comprises a braking device that adds a braking force to the wheels (2), and
wherein the control method for the vehicle (1, 1a) further comprises a step of adding the braking force by the braking device (16) such that the deceleration in which the additional deceleration is added to the target deceleration is generated on the vehicle (1, 1a).

4. The control method for the vehicle (1, 1a) according to any one of claims 1 to 3 further comprising:
a step of increasing the additional deceleration to be higher when the depression amount of the brake pedal in the vehicle (1, 1a) has a first value than when the depression amount of the brake pedal has a second value that is smaller than the first value.

5. The control method for the vehicle according to any one of claims 1 to 4 further comprising:
a step of increasing the additional deceleration to be higher when a depression amount of an accelerator pedal in the vehicle is substantially 0 than when the depression amount of the accelerator pedal is not substantially 0.

6. The control method for the vehicle according to any one of claims 1 to 5 further comprising:
a step of increasing the additional deceleration to be higher when a transmission of the vehicle (1, 1a) is shifted to a deceleration side than when the transmission of the vehicle (1, 1a) is not shifted to the deceleration side.

7. A vehicle controller for controlling a vehicle (1, 1a) having a suspension (30) that includes an elastic member, the vehicle controller comprising:
vehicle control means (14) configured to set target deceleration to be added to the vehicle (1, 1a) based on at least a depression amount of a brake pedal in the vehicle (1, 1a), and to set additional deceleration based on a steering speed of a steering system (6) when a turning operation of the steering system (6) is performed, and to control the vehicle (1, 1a) such that deceleration in which the additional deceleration is added to the target deceleration is generated on the vehicle (1, 1a), **characterized in that** this vehicle control means (14) configured to correct the additional deceleration to increase the additional deceleration, such correction to be higher when actual deceleration generated on the vehicle (1, 1a) or the target deceleration has a first value than when the actual deceleration generated on the vehicle (1, 1a) or the target deceleration has a second value that is lower than the first value.

8. The vehicle controller according to claim 7,
wherein the vehicle control means (14) configured to cause a generator (4) that is driven by the wheel to generate regenerative power such that the deceleration in which the additional deceleration is added to the target deceleration is generated on the vehicle .

9. The vehicle controller according to claim 7,
wherein the vehicle control means configured to add a braking force to the wheelS (2) by a braking device (16) such that the deceleration in which the additional deceleration is added to the target deceleration is generated on the vehicle.

## Patentansprüche

1. Steuerverfahren für ein Fahrzeug (1, 1a) mit: Rädern (2); einer Aufhängung (30), die ein elastisches Element enthält; und einem Lenkwinkelsensor (8), der einen Lenkwinkel eines Lenksystems detektiert, wobei das Steuerverfahren für das Fahrzeug umfasst:
einen Schritt des Festlegens einer Sollverzögerung, die auf das Fahrzeug (1, 1a) aufgebracht werden soll, basierend auf einem Betätigungsausmaß eines Bremspedals in dem Fahrzeug (1, 1a);
einen Schritt des Bestimmens, ob ein Drehvorgang des Lenksystems durchgeführt wird, basierend auf dem Lenkwinkel, der durch den Lenkwinkelsensor (8) detektiert wird;
einen Schritt des Festlegens von zusätzlicher Verzögerung basierend auf einer Lenkgeschwindigkeit, die aus dem Lenkwinkel berechnet wird, wenn festgestellt wird, dass der Drehvorgang des Lenksystems durchgeführt wird;
einen Schritt des Steuerns des Fahrzeugs (1, 1a) derart, dass Verzögerung, bei der zusätzliche Verzögerung zu der Sollverzögerung hinzugefügt wird, an dem Fahrzeug (1, 1a) erzeugt wird, und
**gekennzeichnet durch**
einen Schritt des Korrigierens der zusätzlichen Verzögerung, um die zusätzliche Verzögerung zu erhöhen, wobei eine solche Korrektur höher sein soll, wenn tatsächliche Verzögerung, die an dem Fahrzeug erzeugt wird, oder die Sollverzögerung einen ersten Wert annimmt, als wenn die tatsächliche Verzögerung, die an dem Fahrzeug erzeugt wird, oder die Sollverzögerung einen zweiten Wert annimmt, der niedriger als der erste Wert ist.

2. Steuerverfahren für das Fahrzeug (1, 1a) gemäß Anspruch 1,
wobei das Fahrzeug (1, a) ferner einen Generator (4) aufweist, der durch die Räder angetrieben wird, um regenerative Energie zu erzeugen, und
wobei das Steuerverfahren für das Fahrzeug ferner einen Schritt des Bewirkens umfasst, dass der Generator (4) die regenerative Energie derart erzeugt, dass die Verzögerung, bei der die zusätzliche Verzögerung zu der Sollverzögerung hinzugefügt wird, an dem Fahrzeug (1, 1a) erzeugt wird.

3. Steuerverfahren für das Fahrzeug (1, 1a) gemäß Anspruch 1,
wobei das Fahrzeug (1, 1a) ferner eine Bremsvorrichtung aufweist, die eine Bremskraft auf die Räder (2) aufbringt, und
wobei das Steuerverfahren für das Fahrzeug (1, 1a) ferner einen Schritt des Hinzufügens der Bremskraft durch die Bremsvorrichtung (16) derart umfasst, dass die Verzögerung, bei der die zusätzliche Verzögerung der Sollverzögerung hinzugefügt wird, an dem Fahrzeug (1, 1a) erzeugt wird.

4. Steuerverfahren für das Fahrzeug (1, 1a) nach einem der Ansprüche 1 bis 3, ferner umfassend:
einen Schritt des Erhöhens der Verzögerung dahingehend, höher zu sein, wenn das Betätigungsausmaß des Bremspedals in dem Fahrzeug (1, 1a) einen ersten Wert annimmt, als wenn das Betätigungsausmaß des Bremspedals einen zweiten Wert annimmt, der kleiner als der erste Wert ist.

5. Steuerverfahren für das Fahrzeug nach einem der Ansprüche 1 bis 4, ferner umfassend:
einen Schritt des Erhöhens der zusätzlichen Verzögerung dahingehend, höher zu sein, wenn ein Betätigungsausmaß eines Gaspedals in dem Fahrzeug im Wesentlichen 0 ist, als wenn das Betätigungsausmaß des Gaspedals nicht im Wesentlichen 0 ist.

6. Steuerverfahren für das Fahrzeug nach einem der Ansprüche 1 bis 5, ferner umfassend:
einen Schritt des Erhöhens der zusätzlichen Verzögerung dahingehend, höher zu sein, wenn ein Getriebe des Fahrzeugs (1, 1a) auf eine Verzögerungsseite geschaltet wird, als wenn das Getriebe des Fahrzeug (1, 1a) nicht auf die Verzögerungsseite geschaltet wird.

7. Fahrzeugsteuerung zum Steuern eines Fahrzeugs (1, 1a) mit einer Aufhängung (30), die ein elastisches Element aufweist, wobei die Fahrzeugsteuerung aufweist:
eine Fahrzeugsteuerungseinrichtung (14), die konfiguriert ist, eine Sollverzögerung, die auf das Fahrzeug (1, 1a) aufgebracht werden soll, basierend auf einem Betätigungsausmaß eines Bremspedals in dem Fahrzeug (1, 1a) festzulegen, und zusätzliche Verzögerung basierend auf einer Lenkgeschwindigkeit eines Lenksystems (6) festzulegen, wenn ein Drehvorgang des Lenksystems (6) durchgeführt wird, und das Fahrzeug (1, 1a) derart zu steuern, dass Verzögerung, bei der die zusätzliche Verzögerung der Sollverzögerung hinzugefügt wird, an dem Fahrzeug (1, 1a) erzeugt wird,
**dadurch gekennzeichnet, dass**
diese Fahrzeugsteuerungseinrichtung (14) konfiguriert ist, die zusätzliche Verzögerung zu korrigieren, um die zusätzliche Verzögerung zu erhöhen, wobei solche Korrektur höher sein soll, wenn tatsächliche Verzögerung, die an dem Fahrzeug (1, 1a) erzeugt wird, oder Sollverzögerung einen ersten Wert annimmt, als wenn die tatsächliche Verzögerung, die an dem Fahrzeug (1, 1a) erzeugt wird, oder die Sollverzögerung einen zweiten Wert annimmt, der niedriger als der erste Wert ist.

8. Fahrzeugsteuerung nach Anspruch 7,
wobei die Fahrzeugsteuerungseinrichtung (14) konfiguriert ist, einen Generator (4), der durch das Rad angetrieben wird, zu veranlassen, regenerative Energie derart zu erzeugen, dass die Verzögerung, bei der die zusätzliche Verzögerung der Sollverzögerung hinzugefügt wird, an dem Fahrzeug erzeugt wird.

9. Fahrzeugsteuerung nach Anspruch 7,
wobei die Fahrzeugsteuerungseinrichtung konfiguriert ist, eine Bremskraft auf die Räder (2) durch eine Bremsvorrichtung (16) derart aufzubringen, dass die Verzögerung, bei der die zusätzliche Verzögerung der Sollverzögerung hinzugefügt wird, an dem Fahrzeug erzeugt wird.

## Revendications

1. Procédé de contrôle pour un véhicule (1, 1a) présentant :
des roues (2) ; une suspension (30) qui comporte un élément élastique ; et un capteur d'angle de direction (8) qui détecte un angle de direction d'un système de direction, le procédé de contrôle pour le véhicule comprenant :
une étape de réglage de ralentissement cible devant être ajouté au véhicule (1, 1a) sur la base d'au moins une quantité d'enfoncement d'une pédale de frein dans le véhicule (1, 1a) ;
une étape de détermination visant à savoir si une manœuvre de rotation du système de direction est réalisée sur la base de l'angle de direction qui est détecté par le capteur d'angle de direction (8) ;
une étape de réglage de ralentissement supplémentaire sur la base d'une vitesse de direction calculée à partir de l'angle de direction lorsqu'il est déterminé que la manœuvre de rotation du système de direction est réalisée ;
une étape de contrôle du véhicule (1, 1a) de telle manière que le ralentissement auquel le ralentissement supplémentaire est ajouté au ralentissement cible est généré sur le véhicule (1, 1a) ;
et **caractérisé par**
une étape de correction du ralentissement supplémentaire pour augmenter le ralentissement supplémentaire, ladite correction devant être plus élevée quand le ralentissement instantané généré sur le véhicule ou le ralentissement cible a une première valeur que quand le ralentissement instantané généré sur le véhicule ou le ralentissement cible a une deuxième valeur qui est inférieure à la première valeur.

2. Procédé de contrôle pour le véhicule (1, la) selon la revendication 1,
dans lequel le véhicule (1, la) comprend en outre un générateur (4) qui est entraîné par les roues pour générer une énergie régénérative,
et
dans lequel le procédé de contrôle pour le véhicule comprend en outre une étape déclenchant la génération par le générateur (4) de l'énergie régénérative de telle sorte que le ralentissement auquel le ralentissement supplémentaire est ajouté est ajouté au ralentissement cible est généré sur le véhicule (1, la).

3. Procédé de contrôle pour le véhicule (1, la) selon la revendication 1,
dans lequel le véhicule (1, la) comprend en outre un dispositif de freinage qui ajoute une force de freinage aux roues (2), et
dans lequel le procédé de contrôle pour le véhicule (1, la) comprend en outre une étape d'ajout de la force de freinage par le dispositif de freinage (16) de telle sorte que le ralentissement auquel le ralentissement supplémentaire est ajouté au ralentissement cible est généré sur le véhicule (1, la) .

4. Procédé de contrôle pour le véhicule (1, la) selon l'une quelconque des revendications 1 à 3, comprenant en outre :
une étape d'augmentation du ralentissement supplémentaire de manière à ce qu'il soit plus élevé quand la quantité d'enfoncement de la pédale de frein dans le véhicule (1, la) a une première valeur que quand la quantité d'enfoncement de la pédale de frein a une deuxième valeur qui est inférieure à la première valeur.

5. Procédé de contrôle pour le véhicule selon l'une quelconque des revendications 1 à 4, comprenant en outre :
une étape d'augmentation du ralentissement supplémentaire de manière à ce qu'il soit plus élevé quand une quantité d'enfoncement d'une pédale d'accélérateur dans le véhicule est sensiblement de 0 que quand la quantité d'enfoncement de la pédale d'accélérateur n'est pas sensiblement de 0.

6. Procédé de contrôle pour le véhicule selon l'une quelconque des revendications 1 à 5, comprenant en outre :
une étape d'augmentation du ralentissement supplémentaire de manière à ce qu'il soit plus élevé quand une transmission du véhicule (1, la) est passée sur un côté de ralentissement que quand la transmission du véhicule (1, la) n'est pas passée sur le côté de ralentissement.

7. Contrôleur de véhicule pour contrôler un véhicule (1, la) présentant une suspension (30) qui comporte un élément élastique, le contrôleur de véhicule comprenant :
un moyen de contrôle de véhicule (14) configuré pour régler un ralentissement cible devant être ajouté au véhicule (1, 1a) sur la base d'au moins une quantité d'enfoncement d'une pédale de frein dans le véhicule (1, la), et
pour régler un ralentissement supplémentaire sur la base d'une vitesse de direction d'un système de direction (6) quand une manœuvre de rotation du système de direction (6) est réalisée, et pour contrôler le véhicule (1, la) de telle manière que le ralentissement auquel le ralentissement supplémentaire est ajouté au ralentissement cible est généré sur le véhicule (1, 1a),
**caractérisé en ce que**
le moyen de contrôle de véhicule (14) est configuré pour corriger le ralentissement supplémentaire pour augmenter le ralentissement supplémentaire de manière à ce que cette correction soit plus élevée quand le ralentissement instantané généré sur le véhicule (1, la) ou le ralentissement cible a une première valeur que quand le ralentissement instantané généré sur le véhicule (1, la) ou le ralentissement cible a une deuxième valeur qui est inférieure à la première valeur.

8. Contrôleur de véhicule selon la revendication 7,
dans lequel le moyen de contrôle de véhicule (14) est configuré pour déclencher la génération par un générateur (4) qui est entraîné par la roue d'une énergie régénérative de telle sorte que le ralentissement auquel le ralentissement supplémentaire est ajouté au ralentissement cible est généré sur le véhicule.

9. Contrôleur de véhicule selon la revendication 7,
dans lequel le moyen de contrôle de véhicule est configuré pour ajouter une force de freinage aux roues (2) par un dispositif de freinage (16) de telle sorte que le ralentissement auquel le ralentissement supplémentaire est ajouté au ralentissement cible est généré sur le véhicule.
